# EUROPÄISCHE PATENTANMELDUNG

(11) **EP 4 212 447 A2**
(43) Veröffentlichungstag der Anmeldung: **19.07.2023**
(21) Anmeldenummer: 22214151.7
(22) Anmeldetag: 16.12.2022
(51) Int. Cl.: B65D 6/18, B65D 77/04, G06Q 10/0833

(54) **TRANSPORTSYSTEM FÜR HANDELSWAREN**

(30) Priorität: 21.12.2021 DE 102021134024
(71) Anmelder: Interzero Circular Solutions Germany GmbH, 51149 Köln (DE)
(72) Erfinder: GEUGELIN, Hansjochen, 53844 Troisdorf (DE)
(74) Vertreter: Frick, Robert

(57) **Zusammenfassung**

Die Erfindung betrifft ein Transportsystem (10) für Handelswaren und Liefergüter, umfassend faltbare, aus Kunststoff bestehende, biegesteife Wände (16a, 16b, 17a, 17b) aufweisende und umlauffähig ausgebildete Kisten (11, 12, 13, 14), die aus einem Gebrauchszustand (30), in dem sie eine Quaderform aufweisen, in einen komprimierten Nichtgebrauchszustand (31) überführbar sind, wobei das Transportsystem Kisten (11, 12, 13, 14) unterschiedlicher Art und relativer Dimensionierung aufweist. Die Erfindung betriff ferner ein Verfahren zum Betreiben eines derartigen Transportsystems (10).

## Beschreibung

Die Erfindung bezieht sich auf ein Transportsystem für Handelswaren und Liefergut nach Anspruch 1.

Handelswaren im Sinne der Erfindung sind jegliche Waren, die z.B. von Endverbrauchern in Handelsgeschäften, z.B. in Supermärkten, Discountern, Kaufhäusern, Tankstellen etc. gekauft werden können. Die Handelswaren, z.B. Lebensmittel, werden in der Regel bei bekannten Transportsystemen des Standes der Technik in einem Herstellungsbetrieb von Waren konfektioniert, und mit einer Primärverpackung ausgestattet in die Supermärkte verbracht. Dort werden die Waren abverkauft und von den Käufern zu den Verbrauchsorten oder Verwendungsorten, z.B. zu dem Wohnsitz der Käufer, transportiert. Die Verpackungen werden in der Regel entsorgt. Liefergut im Sinne der Erfindung umfassen beispielsweise gelieferte Speisen aus einem Restaurant in einen Privathaushalt, wobei hierfür Einweg- oder insbesondere auch Mehrweggeschirr zum Einsatz kommen kann.

Ausgehend von den beschriebenen Transportsystemen des Standes der Technik liegt die Aufgabe der Erfindung darin, ein gattungsgemäßes Transportsystem bereitzustellen, welches geschlossene Kreisläufe für Verpackungen und Transportbehältnisse bereitstellt, das aufgrund seines Komforts akzeptanzfähig ist, und das umweltfreundlich ausgestaltet ist.

Die Erfindung löst diese Aufgabe zunächst mit den Merkmalen des Anspruches 1.

Das Prinzip der Erfindung besteht darin, dass ein Transportsystem für Handelswaren und Liefergut bereitgestellt wird, welches eine Vielzahl von Kisten aufweist. Die Kisten bestehen aus Kunststoff und sind umlauffähig ausgebildet. Sie stehen also für eine Mehrfachverwendung zur Verfügung. Die Kisten sind faltbar, und damit aus einem komprimierten Nichtgebrauchszustand, in dem sie nur einen geringen Platzbedarf aufweisen, in einen Gebrauchszustand überführbar, in dem sie eine Quaderform aufweisen. Die faltbaren Kisten umfassen biegesteife Wände.

Derartige faltbare Kisten sind an sich bekannt und in einem erfindungsgemäßen Transportsystem an sich verwendbar. Die Kisten können geschlossene Wände aufweisen, oder mit Öffnungen versehene Wände, so dass eine Art Rippenstruktur vorgesehen ist.

Entscheidend ist, dass die Wände hinreichend biegesteif ausgebildet sind, um die mit den Kisten zu transportierenden Handelswaren und Liefergüter sicher aufnehmen, aufbewahren und transportieren zu können.

Als faltbare, biegesteife Wände aufweisende Kisten im Sinne der Erfindung werden jegliche Arten von Klappboxen, Faltboxen oder Umlegeboxen oder Boxen, Kästen oder Kisten mit teilweise oder vollständig umlegbaren, schwenkbaren, klappbaren oder faltbaren Wänden verstanden, insbesondere Kisten, bei denen vier Seitenwände relativ zu der Bodenwand zwischen einer im Wesentlichen aufrechten Arbeitsposition und einer komprimierten, vorzugsweise parallel oder im Wesentlichen parallel zu der Bodenwand ausgerichteten Nichtgebrauchsposition verlagerbar sind. Die Seitenwände oder nur einige der Seitenwände können in mehrere, gegebenenfalls auch relativ zueinander verlagerbare, Abschnitte oder Segmente unterteilt sein.

Das erfindungsgemäße Transportsystem umfasst Kisten unterschiedlicher Art, nämlich Kisten erster Art, Kisten zweiter Art, und Kisten dritter Art. Die Kisten unterscheiden sich in ihren Größen.

Sämtliche Kisten weisen rechteckige Grundflächen auf. Der rechteckigen Grundfläche sind jeweils Abmessungen zuordenbar. Die Abmessungen der Grundfläche einer Kiste werden von der Länge der Kiste und von der Breite der Kiste bereitgestellt.

Eine erste Besonderheit des erfindungsgemäßen Transportsystems besteht darin, dass eine Kiste erster Art, insbesondere die größte Kiste des Systems, Abmessungen aufweist (also eine Länge und eine Breite) die die Abmessungen der Grundfläche einer Viertelpalette unterschreitet. Die Kiste erster Art weist also eine Länge auf, die geringer ist als die Länge einer Viertelpalette (also weniger als 60 cm) und eine Breite, die kleiner ist als die Breite einer Viertelpalette (also kleiner als 40 cm). Angemerkt sei, dass eine Viertelpalette als Fachterminus im Bereich der Handels- und Lieferlogistik bekannt ist und das Viertelmaß einer Euro-15 Standardpalette (80 cm x 120 cm) beschreibt.

Eine Kiste erster Art mit der beschriebenen Grundfläche bietet die Möglichkeit, die Kiste erster Art ausreichend groß auszubilden, sodass ein für die beabsichtigten Zwecke ausreichend großer Stauraum zur Verfügung steht. Zum anderen sind die Dimensionen so gewählt, dass die Kisten gut greifbar, tragbar und transportierbar sind. Dies auch in einem befüllten Zustand. Schließlich passt eine Kiste erster Art gut in einen herkömmlichen Einkaufswagen.

Das erfindungsgemäße Transportsystem umfasst darüber hinaus eine Kiste zweiter Art. Die Kiste zweiter Art weist eine rechteckige Grundfläche mit zweiten Abmessungen auf. Die zweiten Abmessungen sind so gewählt, dass sie die ersten Abmessungen unterschreiten.

Schließlich umfasst das Transportsystem auch noch Kisten dritter Art. Auch die Kisten dritter Art weisen jeweils eine rechteckige Grundfläche auf, die dritte Abmessungen aufweist. Die dritten Abmessungen unterschreiten die zweiten Abmessungen.

Mit anderen Worten weist die Kiste dritter Art eine Länge auf, die kleiner ist als die Länge der Kiste zweiter Art. Die Kiste zweiter Art weist eine Länge auf, die kleiner ist als die Länge der Kiste erster Art.

Weiter weist die Kiste dritter Art eine Breite auf, die kleiner ist als die Breite der Kiste zweiter Art. Die Kiste zweiter Art weist eine Breite auf, die kleiner ist als die Breite der Kiste erster Art.

Das erfindungsgemäße Transportsystem sieht darüber hinaus vor, dass die Abmessungen der Kisten derart gewählt sind, dass zwei Kisten dritter Art quer in eine Kiste erster Art passen. Außerdem sind die Abmessungen so gewählt, dass eine Kiste dritter Art längst in eine Kiste zweiter Art passt. Zu guter Letzt sind die Abmessungen so gewählt, dass eine Kiste zweiter Art längs in eine Kiste erster Art passt. Das erfindungsgemäße Transportsystem bietet also Kisten drei unterschiedlicher Arten, die ineinander eingesetzt werden können.

Hieraus ergeben sich erhebliche Akzeptanz-, Handlings- und Handhabungsvorteile: Insbesondere die Kiste dritter Art kann erfindungsgemäß z.B. innerhalb des Transportsystems als Primärverpackung für Handels- oder Lieferwaren eingesetzt werden. Sie kann also z.B. im Werk des Herstellers der Waren oder im Werk eines Befüllers konfektioniert werden. Dort wird die Kiste dritter Art mit Handels- oder Lieferwaren befüllt.

Eine solche Kiste kann von der Befüllstation oder von dem Hersteller oder Konfektionierungsbetrieb zu einem Handelsgeschäft verbracht werden. Dort kann die Kiste dritter Art mit den darin befindlichen Waren für einen Abverkauf bereit stehen.

In dem Handelsgeschäft werden aber erfindungsgemäß auch noch Kisten zweiter Art und Kisten dritter Art bereitgestellt Diese können von Kunden in dem Supermarkt mit den im Supermarkt angebotenen Waren befüllt werden. Sie dienen aber gemäß der erfindungsgemäßen Auswahl der Abmessungen der Kisten unterschiedlicher Art auch dazu, die Kisten dritter Art aufzunehmen. Damit kann während eines Einkaufes in einem Handelsgeschäft eine Kiste zweiter Art oder eine Kiste dritter Art dazu verwendet werden, sowohl eine Kiste erster Art aufzunehmen, mit darin angeordneten Handelswaren, so dass die Kiste dritter Art als Primärverpackung fungiert, wobei zugleich aber auch weitere Waren, die in dem Supermarkt oder dem Handelsgeschäft eingekauft werden können, von den Kisten zweiter Art oder von den Kisten dritter Art aufgenommen werden können.

In einem Restaurant bzw. Lieferdienst können die Kisten unterschiedlicher Art für den Transport von Liefergut, insbesondere von Essen, z.B. mit Mehrweggeschirr vorrätig gehalten und befüllt werden. Das Transportsystem wird hierbei für den Transport von Liefergut und insb. auch Mehrweggeschirr zu einem Kunden sowie zum Rücktransport von z.B. verschmutztem Mehrweggeschirr vom Kunden benützt.

Sämtliche Kisten, also sowohl die Kiste dritter Art (die Primärverpackung) als auch die Kisten zweiter Art und erster Art sind umlauffähig ausgebildet, d.h. sie können Bestandteil eines Pfandrücknahmesystems sein. Angemerkt sei, dass auch die Kisten zweiter Art und erster Art als Primärverpackung eingesetzt werden können. Damit kann für die gesamte Transportkette unter Einschluss der Herstellerbetriebe, der Supermärkte und der Endkunden, ein geschlossenes, gut handhabbares Transportsystem bereitgestellt werden, das eine Rückführung der Kisten umfasst.

Die erfindungsgemäße Besonderheit, dass Kisten unterschiedlicher Art entlang unterschiedlicher Orientierung und Anzahl in Kisten anderer Art auf die im Anspruch beschriebene Weise einsetzbar sind, ermöglicht eine wählbare Zusammenstellung von Kisten zu Handhabungseinheiten, wodurch die Handhabung flexibel und erleichtert ist: So kann z.B. ein Endverbraucher in einem Supermarkt eine Kiste erster Art kaufen oder ausleihen, darin eine oder mehrere Kisten dritter Art anordnen, die z.B. eine Primärverpackung mit Handels- oder Lieferwaren umfassen, und zusätzlich noch weitere Handels- oder Lieferwaren in der Kiste erster Art unterbringen, die in dem Handelsgeschäft oder dem Emittenten lose bereitgestellt sind. Hierdurch kann der Benutzer also die Kiste erster Art - oder die Kiste zweiter Art - modular und entsprechend seiner jeweiligen Einkaufs- und Transportbedürfnisse zusammenstellen, kombinieren und transportieren.

Die Faltbarkeit kann insbesondere vorteilhaft genutzt werden, wenn der Endverbraucher die z. B. pfandbehafteten Kisten unterschiedlicher Art zurückgibt. Dabei können mehrere zusammengefaltete Kisten zweiter Art und/oder dritter Art, gegebenenfalls auch erster Art, in jeweils größeren Kisten untergebracht und komfortabel transportiert werden.

Das erfindungsgemäße Transportsystem ist also modular aufgebaut, wobei sich durch den Modulcharakter eine Flexibilität und eine Vielzahl von Handhabungsvorteilen ergeben. Die Erfindung bietet auch eine Möglichkeit eines Einsatzes im Rahmen von Click & Collect und auch für Lieferdienste.

Auch wenn nur Kisten erster Art und dritter Art vorgesehen sind, werden bereits wesentliche, zuvor beschriebenen Vorteile erreicht.

Gemäß einer Ausgestaltung der Erfindung sind die Kisten unterschiedlicher Art jeweils in ihrem Nichtgebrauchszustand und/oder in ihrem Gebrauchszustand auf einander stapelbar ausgebildet. Diese Ausführungsform bietet den Vorteil, dass eine Handhabung erleichtert ist.

Eine Stapelbarkeit von Kisten im Gebrauchszustand ermöglicht insbesondere einen Transport von mit Handels- und Lieferwaren befüllten Kisten in platzsparender Weise von und zu den Handelsgeschäften bzw. Transportunternehmen. Vorteilhaft sind die Höhen der Kisten so gewählt, dass ein Stapel von mindestens zwei Kisten dritter Art eine kleinere Höhe aufweist als eine Kiste erster Art. Eine Stapelbarkeit von im Nichtgebrauchszustand befindlichen Kisten ermöglicht eine platzsparende Unterbringung und einen platzsparenden Transport.

Die Stapelbarkeit kann z.B. unter Zuhilfenahme eines Stapelrandes, insbesondere von einem oberen und einem unteren Stapelrand, bereitgestellt sein. Dabei kann insbesondere für eine rutschsichere, relative Positionierung von zwei gestapelten Kisten gesorgt werden.

Gemäß einer weiteren Ausgestaltung der Erfindung weisen die die Kisten eine Kennung auf. Diese Ausgestaltung der Erfindung ermöglicht eine Unterscheidbarkeit der Kisten voneinander, entweder ihrer Art nach oder eine Unterscheidung einzelner Kisten. Dies ermöglicht weiter eine besonders gute Handhabbarkeit.

Gemäß einer weiteren Ausgestaltung der Erfindung bezeichnet die Kennung die Art der Kiste, wobei unterschiedlichen Arten von Kisten unterschiedliche Kennungen zugeordnet sind. Diese Ausgestaltung der Erfindung ermöglicht eine vorzugsweise auch automatisierbar erfassbare Unterscheidbarkeit unterschiedlicher Arten von Kisten. Damit wird z.B. die Möglichkeit einer automatischen Sortierung geöffnet. Auch kann automatisch eine Berücksichtigung unterschiedlicher Pfandvermerke erfolgen.

Gemäß einer weiteren Ausgestaltung der Erfindung bezeichnet die Kennung eine individuelle Kiste, wobei die Kennung als eine Seriennummer ausgebildet ist, die die einzelnen Kisten voneinander unterscheidbar macht. Die Ausführungsform der Erfindung ermöglicht eine individuelle Verwaltung einzelner Kisten. So kann beispielsweise von einem Rechner mittels einer Lese- oder Schreibeinrichtung einer Kiste eine Information zugeordnet werden, dass eine bestimmte Kiste mit einer bestimmten Handels- oder Lieferware befüllt ist oder war.

Auch können Transportwege nachvollzogen werden. Weiter können Umlaufzyklen, z.B. Häufigkeiten von Verwendungen bestimmter Kisten, oder auch deren Verweildauern an unterschiedlichen Stationen festgehalten werden. So kann beispielsweise automatisch an einer Station in dem Transportsystem erkannt werden, wie viele Verwendungen die einzelne Kiste schon erfahren hat, um beispielsweise eine Überprüfung zu veranlassen, ob die Kiste ausgetauscht werden muss.

Gemäß einer weiteren Ausgestaltung der Erfindung ist die Kennung maschinell auslesbar oder maschinengestützt auslesbar ausgebildet, und z.B. optisch und/oder elektronisch auslesbar ausgebildet ist, z.B. als alphanumerischer Code oder als Barcode oder als RFID-tag ausgebildet ist. Dies ermöglicht eine besonders komfortable Handhabung und den Einsatz von automatischen Leseeinrichtungen.

Gemäß einer weiteren Ausgestaltung der Erfindung, ist die Kennung als ein alphanumerischer Code ausgebildet und visuell erkennbar. Diese Ausführung ermöglicht beispielsweise ein Auslesen der Kennung durch einen Endverbraucher. Die Kennung ist beispielsweise über einen Browser auf einer Website eingebbar. Darüber kann eine Information abgerufen werden, die zu der Kiste in Bezug steht.

Gemäß einer weiteren Ausgestaltung der Erfindung umfasst das Transportsystem einen Rechner, der die Kennungen der Kisten verwaltet. Dies ermöglichten eine automatisierte, komfortable, vereinfachte Administration und Verwaltung des Transportsystems.

Gemäß einer weiteren Ausgestaltung der Erfindung ist mittels eines Rechners einer als Seriennummer ausgebildeten Kennung einer Kiste eine Information über eine Handels- oder Lieferware und/oder eine Information über einen Zeitpunkt und/oder über eine Zeitdauer und/oder eine Information über einen Reinigungsvorgang und/oder eine Information über eine Zahl an Verwendungen der Kiste zuordenbar. Dies ermöglichten eine besonders komfortable Handhabung und eine Gewährleistung hoher Sicherheit. So kann beispielsweise nachgehalten und dokumentiert sowie gegebenenfalls sichergestellt werden, dass eine bestimmte Kiste einer Reinigung oder Desinfektion unterzogen wurde, bevor sie eine bestimmte Art von Waren aufnimmt.

Auch kann z.B. festgestellt werden, wenn eine bestimmte vorgeschriebene maximale Zahl von Verwendungen einer Kiste erreicht oder überschritten ist. Hierdurch kann beispielsweise eine manuelle oder visuelle Überprüfung einer einzelnen Kiste auf Beschädigung und Funktionstüchtigkeit veranlasst werden.

Gemäß einer weiteren Ausgestaltung der Erfindung weist eine Kiste an ihren Schmalseiten jeweils Griffe und/oder Grifföffnungen auf. Dies ermöglicht eine besonders komfortable Handhabung.

Gemäß einer weiteren Ausgestaltung der Erfindung sind Kisten unterschiedlicher Art zueinander im geometrischen Sinne ähnlich oder maßstäblich zueinander ausgebildet. Dies ermöglicht eine besonders einfache Zuordenbarkeit unterschiedlicher Arten von Kisten zueinander.

Gemäß einer weiteren Ausgestaltung der Erfindung weist eine Kiste erster Art eine Breite zwischen 34 cm und 39,5 cm, eine Länge zwischen 53 cm und 59,5 cm, und im Gebrauchszustand eine Höhe zwischen 27 cm und 33 cm auf. Dies ermöglicht eine besonders komfortable Handhabung. Gemäß einer weiteren Ausgestaltung der Erfindung weist eine Kiste zweiter Art eine Breite zwischen 24 cm und 34 cm, eine Länge zwischen 30 cm und 45 cm, und im Gebrauchszustand eine Höhe zwischen 17 cm und 25 cm auf. Dies ermöglicht eine besonders komfortable Handhabung. Gemäß einer weiteren Ausgestaltung der Erfindung weist eine Kiste dritter Art eine Breite zwischen 18 cm und 24 cm, eine Länge zwischen 25 cm und 34 cm, und im Gebrauchszustand eine Höhe zwischen 8 cm und 16 cm aufweist. Dies ermöglicht eine besonders komfortable Handhabung.

Gemäß einer weiteren Ausgestaltung der Erfindung ist eine Einrichtung vorgesehen, mit der die Kennung auslesbar ist. Dies ermöglicht eine komfortable automatisierte Handhabung. Auch kann die Einrichtung eines Pfandrücknahmesystems komfortabel erfolgen.

Gemäß einer weiteren Ausgestaltung der Erfindung ist die Einrichtung einem Pfandrücknahmeautomaten zugeordnet. Dies ermöglicht eine Einbindung des erfindungsgemäßen neuen Transportsystems in bestehende Mehrwegsysteme für Mehrwegbehältnisse, wie z.B. Getränkeflaschen oder Flaschenkisten.

Gemäß einer weiteren Ausgestaltung der Erfindung sind mit der Einrichtung zusätzlich Mehrwegbehältnisse in Form von Gläsern oder Flaschen erkennbar. Dies ermöglicht eine besonders komfortable Konstruktion einer solchen Einrichtung.

Darüber hinaus besteht bei diesem Ausführungsbeispiel der Erfindung die Möglichkeit, bestehende Pfandrücknahmeautomaten umzurüsten, so dass sie zusätzlich auch die Kisten des erfindungsgemäßen Transportsystems erkennen kann, beispielsweise durch eine Art Nachrüstbarkeit.

Gemäß einer weiteren Ausgestaltung der Erfindung ist der Kennung ein beschreibbarer Speicher zugeordnet, insbesondere an den Kisten angeordnet. Dies ermöglicht eine Zuordnung von Informationen zu einer bestimmten Kiste, wobei die Information insbesondere an der Kiste gesichert ist.

Gemäß einer weiteren Ausgestaltung der Erfindung umfasst das Transportsystem eine Schreibeinrichtung, mit der eine Information in den Speicher einschreibbar ist. Dies ermöglicht z.B. eine automatisierte Zuordnung von Informationen zu einer bestimmten Kiste.

Gemäß einer weiteren Ausgestaltung der Erfindung stellt eine Kiste dritter Art eine Primärverpackung für Handels- oder Lieferwaren bereit. Dies ermöglicht eine Bereitstellung einer Mehrweg-Primärverpackung, die über verschiedene Handelsstufen hinweg bis zum Endverbraucher und zurück einsetzbar ist.

Gemäß einer weiteren Ausgestaltung der Erfindung ist eine Waschstation und/oder eine Reinigungsstation und/oder eine Desinfektionsstation für die Kisten vorgesehen. Dies ermöglicht eine mehrfache Wiederverwendung.

Gemäß einer weiteren Ausgestaltung der Erfindung ist ein Lagerbereich oder ein Bereitstellungsbereich für eine Mehrzahl leerer Kisten in einem Handelsgeschäft oder Lieferbetrieb vorgesehen, wobei der Bereitstellungsbereich Kisten für eine Verwendung bereitstellt. Dies ermöglicht eine Bereitstellung leerer Kisten z.B. nahe von Bereichen in Handelsgeschäften oder Lieferbetrieben, in denen andere lose Waren bereitgestellt werden, so dass die leeren Kisten unmittelbar mit diesen losen Waren befüllt werden können, und auf andere Transportbehältnisse für einen Transport der Waren verzichtet werden kann.

Der Erfindung liegt weiterhin die Aufgabe zugrunde, ein Verfahren anzugeben, mit dem ein Transportsystem mit einer Mehrzahl von Kisten zur Aufnahme und für den Transport von Handelswaren und Liefergütern betrieben werden kann.

Die Erfindung löst diese Aufgabe mit den Merkmalen des unabhängigen Verfahrensanspruchs.

Das erfindungsgemäße Prinzip versteht sich am besten anhand der oben beschriebenen Merkmale, auf deren Erläuterungen zur Vermeidung von Wiederholungen zurückgegriffen werden kann.

Die Besonderheit besteht darin, dass aus Kunststoff bestehende, faltbare Kisten, die umlauffähig ausgebildet sind und biegesteife Wände aufweisen, bereitgestellt werden und zu einem Betrieb oder Werk transportiert werden, der Handelswaren oder Liefergüter herstellt oder abfüllt. Dort kann die Kiste befüllt oder konfektioniert werden. Die Kiste wird sodann, in einem mit Handelswaren oder Liefergütern befüllten Zustand, zu einem Handelsgeschäft bzw. Lieferdienst transportiert. Dort wird sie für einen Abverkauf und für einen Abtransport bereitgestellt.

Beim Abverkaufen wird ein Vermerk, z.B. ein Pfandvermerk, generiert, z.B. ein elektronischer Pfandvermerk generiert, oder ein Pfand wird einbehalten.

Das Merkmal, dass beim Abverkaufen der Handelswaren oder Liefergütern zusammen mit der diese aufnehmenden Kiste ein Vermerk generiert wird, kann eine Vielzahl von Varianten umfassen: Zum Beispiel kann ein Vermerk, z.B. ein Pfandvermerk, elektronisch generiert werden, sodass z.B. Beim Scannen an der Kasse zusätzlich zu dem Kaufpreis der Handelswaren oder Liefergütern auch ein Pfand für die Kiste erhoben wird.

Es kann aber auch vorgesehen sein, dass ein solcher Vermerk, z.B. ein Pfandvermerk, rein elektronisch generiert oder ausgelöst wird, indem z.B. eine individuelle Kiste oder eine Kiste einer bestimmten Art mittels eines elektronischen Pfandes einem bestimmten Kunden zugeordnet wird; letzteres kann z. B. umfassen, dass zumindest dem Handelsgeschäft oder Lieferdienst, insbesondere dem Kassensystem des Handelsgeschäftes oder Lieferdiensts, die Identität des Kunden bekannt ist. Auch können Vermerke mittels Kundenkarten oder Bonussystemen einem bestimmten Kunden zugeordnet werden.

Der Vermerk kann aber auch derartig ausgebildet sein, dass auf der Kiste selbst vermerkt wird, z.B. durch einen Code, durch einen Aufkleber, einen Bon, eine Beschriftung oder dergleichen, dass die entsprechende Kiste das Handelsgeschäft ordnungsgemäß verlassen hat. Ein solcher Vermerk kann an der Kiste angebracht werden, oder über eine Seriennummer der Kiste in dem Kassensystem vorgenommen und z.B. damit in einem Netzwerk des Transportsystems vermerkt werden.

Eine Generierung des Vermerks ermöglicht es, den Vermerk einem bestimmten Käufer oder einem bestimmten Endverkäufer oder einem bestimmten kaufenden Betrieb zuzuordnen. So kann z.B., insbesondere, wenn entsprechende Zahlungen der zu kaufenden Handelswaren oder Liefergüter über Payback oder andere Rückvergütungssysteme oder Bonussysteme oder Kundenkarten erfolgen, dem Inhaber einer solchen Karte ein entsprechender Vermerk zugeordnet werden.

Ein Netzwerk und/oder ein dem Netzwerk zugehöriger Rechner können individualisierte Vermerke, oder Käufern oder Verbrauchern zugeordnete Vermerke, verwalten und eine Verarbeitung der entsprechenden Informationen durchführen.

Stellt das Netzwerk oder ein dem Netzwerk angehörender Rechner z.B. fest, dass bei einer bestimmten Person z.B. eine hohe Anzahl von Kisten, z.B. von mehr als fünf oder zehn Kisten, akkumuliert sind, oder - gegebenenfalls auch in Kombination mit einer Kistenanzahl - entsprechende Schwell-Verweildauern erreicht oder überschritten werden, können automatische oder individualisierte Benachrichtigungen generiert werden und an den Kunden ergehen, dies z.B. verbunden mit der Aufforderung, die Kisten rückzuführen. Dabei können dem Verbraucher Anreize für eine Rückgabe oder eine baldige Rückgabe in Aussicht gestellt werden, z.B. erhöhte Pfandrückzahlungen.

Ein Rechner des Netzwerkes kann also z.B. bei bestimmten Ausführungsformen der Erfindung auch eine Verwaltung von Vermerken in Bezug zu Endkunden und eine Verarbeitung dieser Daten erlauben.

Sodann kann die Kiste zu einem Verbrauchsort oder einem Verwendungsort für die Handelswaren oder Liefergüter verbracht werden. Nachfolgend kann die geleerte Kiste, die also von den Handelswaren oder Liefergüter befreit ist, rücktransportiert werden. Der Rücktransport findet entweder unmittelbar zu dem Handelsgeschäft oder Lieferdienst statt oder zu einem anderen Geschäft oder zu einer Rücknahmeeinrichtung. Die Rücknahmeeinrichtung kann z.B. auch ein Pfandautomat sein.

Dort wird gemäß dem erfindungsgemäßen Verfahren die geleerte Kiste zurückgenommen. Dabei kann das Pfand zurückgezahlt werden oder eine entsprechende Berücksichtigung des zuvor generierten Vermerkes erfolgen, z.B. durch Generierung eines Bons oder einer Gutschrift.

Sodann kann die Kiste gereinigt und/oder desinfiziert und/oder gewaschen werden.

Die auf diese Weise gereinigte oder desinfizierte Kiste kann nachfolgend für eine erneute Durchführung des Verfahrens bereitgestellt werden.

Das erfindungsgemäße Verfahren ermöglicht also das Betreiben eines Transportsystems ausschließlich mit Mehrwegbehältnissen. Auf Einwegbehältnisse, wie beispielsweise Einwegprimärverpackungen oder Einwegtransportverpackungen, kann verzichtet werden. Insofern ist das Transportsystem insbesondere geeignet für den Transport von Mehrwegbehältern zur Mitnahme von Lebensmitteln, wie es im Rahmen der Gesetzgebung zu Mehrwegalternativen für Einwegkunststofflebensmittelverpackungen (inkl. entsprechender Getränkebecher) gefordert ist. Im Rahmen dieser Anwendung umfasst das Verfahren den Transport der gereinigten Transportboxen zum Emittenten, beispielsweise dem Lebensmitteleinzelhandel oder einem Restaurantbetrieb. Nach einer Nutzung und Rückgabe der Mehrwegverpackungen durch einen Endverbraucher sammelt der Emittent die benutzten und ggf. verschmutzten Mehrwegverpackungen in den Transportboxen. Die mit den verschmutzten Verpackungen befüllten Transportboxen werden von einem Anbieter abgeholt, einer Reinigung unterzogen (Verpackung und Transportbox) und in den beschriebenen Kreislauf zurückgeführt.

Sofern ein Emittent, insbesondere ein Lebensmitteleinzelhandel Click & Collect anbietet, kann eine Transportbox auch für beide Anwendungsfälle gemischt genützt werden. So kann vorgesehen sein, dass der Endkunde bei Click & Collect bestellt, die Transportbox erhält und diese nach der Nutzung wieder zum Emittenten zurückbringt. Der Emittent nutzt die Box dann seinerseits zur Sammlung schmutziger Mehrwegverpackungen und zu deren Transport zu einem Anbieter für die Reinigung, wie oben beschrieben.

Vorteilhaft wird in dem Handelsgeschäft oder Lieferdienst wenigstens eine Kiste einer weiteren Art bereitgestellt. Diese weitere Kiste dient der Befüllung mit Handelswaren oder Liefergütern, die insbesondere in dem Handelsgeschäft oder Lieferdienst erworben werden können. Dabei kann insbesondere auch vorgesehen sein, dass die weitere Art von Kisten die zuvor bereitgestellte Kiste aufnehmen kann.

Ein wie im Transportsystem der vorliegenden Erfindung in einer Ausführungsform zur Anwendung kommender Pfandautomat umfasst eine Aufnahmeöffnung. In diese sind Kisten der zuvor beschriebenen Art, insbesondere Kisten der zuvor beschriebenen unterschiedlichen Arten, einsetzbar. Die Kisten sind faltbar ausgebildet und dienen dem Transport und der Aufnahme von Handelswaren oder Liefergütern. Die Kisten werden insbesondere leer in dem Pfandautomaten eingesetzt.

Die Kisten bestehen aus Kunststoff und weisen biegesteife Wände auf. Sie sind umlauffähig ausgebildet.

Der Pfandautomat umfasst eine Detektionseinrichtung. Mit dieser sind die in die Aufnahmeöffnung eingesetzten Kisten erkennbar. Insbesondere kann der Pfandautomat eine Pfandauszahlung initiieren oder veranlassen, gegebenenfalls das Drucken eines Bons. Von der Erfindung wird auch umfasst, wenn ein Vermerk, insbesondere Pfandvermerk, berücksichtigt wird, z. B. datentechnisch bearbeitet oder verarbeitet wird.

Die Pfanderfassung kann auch unabhängig von Bons oder Geldrückzahlungen, z. B. elektronisch erfolgen, z.B. durch Überweisung auf ein Handy oder ein mobiles Endgerät, wobei diese Ausgestaltung von der Erfindung mit umfasst ist.

Vorteilhafterweise kann der Pfandautomat die Kisten erkennen, wenn sich diese im Gebrauchszustand befinden und/oder kann der Pfandautomat die Kisten erkennen, wenn sich diese im Nichtgebrauchszustand befinden.

Die Kennung ist also insbesondere derart ausgebildet und/oder derart an der jeweiligen Kiste angeordnet, dass sie sowohl bei in Nichtgebrauchszustand befindlicher Kiste als auch bei in Gebrauchsposition befindlicher Kiste gut erkennbar und auslesbar ist.

Alternativ kann vorgesehen sein, dass die Kiste mehrere Kennungen aufweist. Dabei kann insbesondere vorgesehen sein, dass eine erste Art von Kennung bei in Nichtgebrauchsposition befindlicher Kiste gut auslesbar ist und eine zweite Art von Kennung gut bei in Gebrauchsposition befindlicher Kiste auslesbar ist.

Gemäß einer vorteilhaften Ausgestaltung der Erfindung ist die Detektionseinrichtung dazu ausgebildet, Kisten unterschiedlicher Art unterscheidbar voneinander zu erkennen. Weiter kann die Detektionseinrichtung dazu ausgebildet sein, Kennungen von Kisten unterschiedlicher Art zu lesen. Dabei können für Kisten unterschiedlicher Art unterschiedliche Vermerke generiert oder berücksichtigt werden oder unterschiedliche Pfandauszahlungen veranlasst oder initiiert werden.

Gemäß einer weiteren vorteilhaften Ausgestaltung der Erfindung ist die Detektionseinrichtung dazu ausgebildet, Kennungen von Kisten, aber auch Kennungen von Pfandflaschen oder Pfandgläsern oder von anderen Mehrwegbehältnissen, auszulesen. Damit kann mit einem Pfandautomaten, der kommerziell übliche pfandbehaftete Mehrwegbehältnisse erkennen kann, zusätzlich auch eine Erkennung von Kisten eines erfindungsgemäßen Transportsystems erfolgen.

Das erfindungsgemäße beinhaltet in einer Ausführungsform Transportsystem einen geschlossenen Bewegungspfad. Vorteilhaft weist das Transportsystem eine Vielzahl geschlossener Bewegungspfade auf.

Als Bewegungspfad wird ein z.B. in einem Flussdiagramm erkennbarer Transportweg der Kisten oder eine Bewegungsbahn der Kisten angesehen. Diese ist geschlossen, so dass nach einem Umlauf, gegebenenfalls unter Berücksichtigung von Abzweigungen und inneren oder äußeren Schleifen, eine Kiste wieder an denselben Ort zurückgerät oder an dieselbe Station oder an eine funktionsgleiche Station oder an einem funktionsgleichen Ort.

Bei dem Transportsystem der erfindungsgemäßen Art kann eine Rücknahmestation, aber auch eine Vielzahl von Rücknahmestationen vorgesehen sein. Das geschlossene System im Sinne der Erfindung verlangt dabei lediglich, dass eine Kiste zu einer der Mehrzahl von Rücknahmestationen gelangt.

Das Gleiche gilt für die Befüllstation. Es können also erfindungsgemäß eine oder zahlreiche Bereitstellungsstationen vorgesehen sein. Es können erfindungsgemäß ein oder zahlreiche Verbrauchsstationen vorgesehen sein. Es können erfindungsgemäß eine oder zahlreiche Rücknahmestationen vorgesehen sein und es können erfindungsgemäß eine oder zahlreiche Wasch- und/oder Reinigungs- und/oder Desinfektionsstationen vorgesehen sein. Auf diese Weise wird ein geschlossener Kreislauf gewährleistet.

Weitere Vorteile der Erfindung ergeben sich aus den nicht zitierten Unteransprüchen und anhand der nachfolgenden, in den Zeichnungen dargestellten Ausführungsbeispiele der Erfindung.

In den Zeichnungen zeigen:
- Fig. 1: in einer schematischen, perspektivischen Ansicht ein Ausführungsbeispiel einer Kiste als Bestandteil eines erfindungsgemäßen Transportsystems in Gebrauchsposition, wobei die dem Betrachter entgegenspringende Schmalseitenwand teilweise eingeschwenkt ist,
- Fig. 2: die Kiste der Fig. 1 in einer schematischen, teilgeschnittenen Längsansicht gemäß Ansichtspfeil II in Fig. 1, wobei beide Schmalseitenwände teilweise eingeschwenkt sind,
- Fig. 3: das Ausführungsbeispiel der Kiste der Fig. 1 in einer Ansicht gemäß Ansichtspfeil 111, wobei die Längsseitenwände teilweise eingefaltet sind,
- Fig. 4a: in einer perspektivischen Ansicht gemäß Fig. 1, eine Kiste dritter Art,
- Fig. 4b: in einer Darstellung gemäß Fig. 4a eine Kiste zweiter Art,
- Fig. 4c: in einer Darstellung gemäß Fig. 4a eine Kiste erster Art,
- Fig. 5a: in einer Draufsicht in einer schematischen Darstellung gemäß Ansichtspfeil Va in Fig. 4c, eine Kiste erster Art, in die eine Kiste zweiter Art längs eingesetzt ist,
- Fig. 5b: in einer Darstellung gemäß Fig. 5a, entsprechend dem Ansichtspfeil Vb in Fig. 4b, eine Kiste zweiter Art, in die eine Kiste dritter Art längs eingesetzt ist,
- Fig. 5c: in einer Draufsicht in einer schematischen Darstellung gemäß Fig. 5a, entsprechend dem Ansichtspfeil Vc in Fig. 4c, eine Kiste erster Art, in die zwei Kisten dritter Art quer eingesetzt sind,
- Fig. 6: in einer vergrößerten Darstellung etwa gemäß Ansichtsteilkreis VI in Fig. 2, eine auf der Kiste angebrachte Kennung in Alleindarstellung,
- Fig. 7: in einer vergrößerten Darstellung eine Kiste gemäß Fig. 4a, wobei die Kiste mit Handelswaren befüllt ist,
- Fig. 8: die Kiste erster Art in einer Längsseitenansicht gemäß Ansichtspfeil VIII in Fig. 4c,
- Fig. 9: die Kiste zweiter Art in einer Längsseitenansicht gemäß Ansichtspfeil IX in Fig. 4b, in einer Darstellung gemäß Fig. 8,
- Fig. 10: die Kiste dritter Art in einer Längsseitenansicht gemäß Ansichtspfeil X in Fig. 4a,
- Fig. 11: die Kiste erster Art gemäß Fig. 8, gemäß Ansichtspfeil XI in Fig. 8, schematisch in Draufsicht,
- Fig. 12: die Kiste zweiter Art gemäß Fig. 9 schematisch in Draufsicht, etwa gemäß Ansichtspfeil XII in Fig. 9,
- Fig. 13: die Kiste dritter Art schematisch in Draufsicht gemäß Fig. 10, etwa gemäß Ansichtspfeil XIII,
- Fig. 14: in einer blockschaltbildartigen Gesamtdarstellung ein Ausführungsbeispiel eines erfindungsgemäßen Transportsystems unter Darstellung der Bewegungspfade
- Fig. 15: in einer schematischen Vorderansicht eine Rücknahmeeinrichtung in Form eines Pfandautomaten
- Fig. 16: in einer teilgeschnittenen, schematischen Darstellung den Pfandautomaten der Fig. 15, etwa entlang Schnittlinie XVI - XVI in Fig. 15,
- Fig. 17: in einer schematischen, perspektivischen Darstellung eine Stapelanordnung von zwei Kisten dritter Art gemäß Fig. 4a in Gebrauchsposition, und
- Fig. 18: in einer schematischen Darstellung einen Stapel von zwei in Nichtgebrauchsposition befindlichen, komprimierten Kisten gemäß Fig. 17.

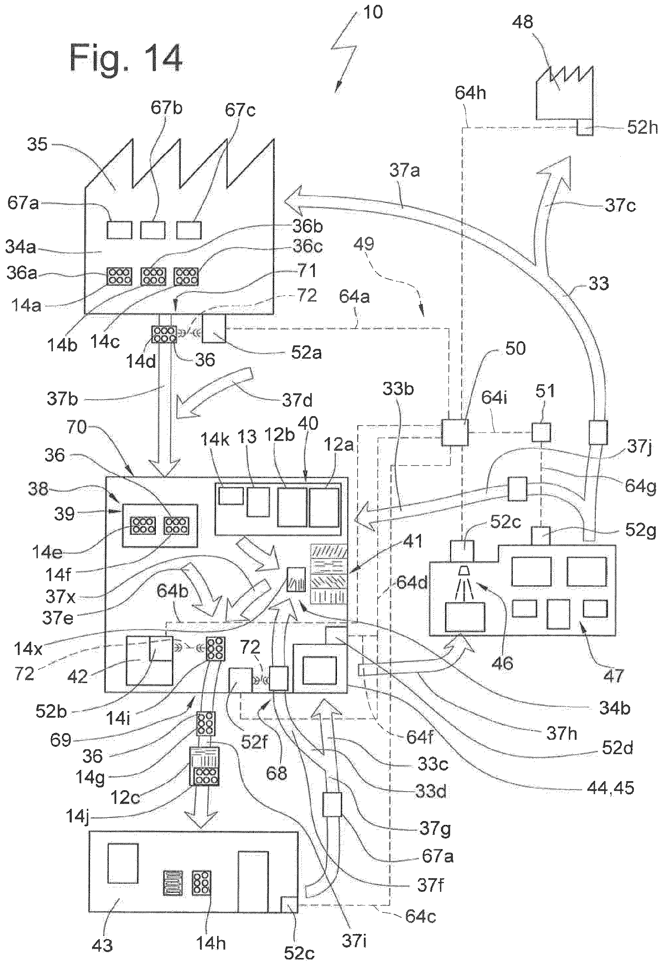

Das Ausführungsbeispiel eines erfindungsgemäßen Transportsystems ist in seiner Gesamtheit in den Figuren mit dem Bezugszeichen 10 bezeichnet und beispielsweise in Fig. 14 schematisch, blockschaltbildartig dargestellt.

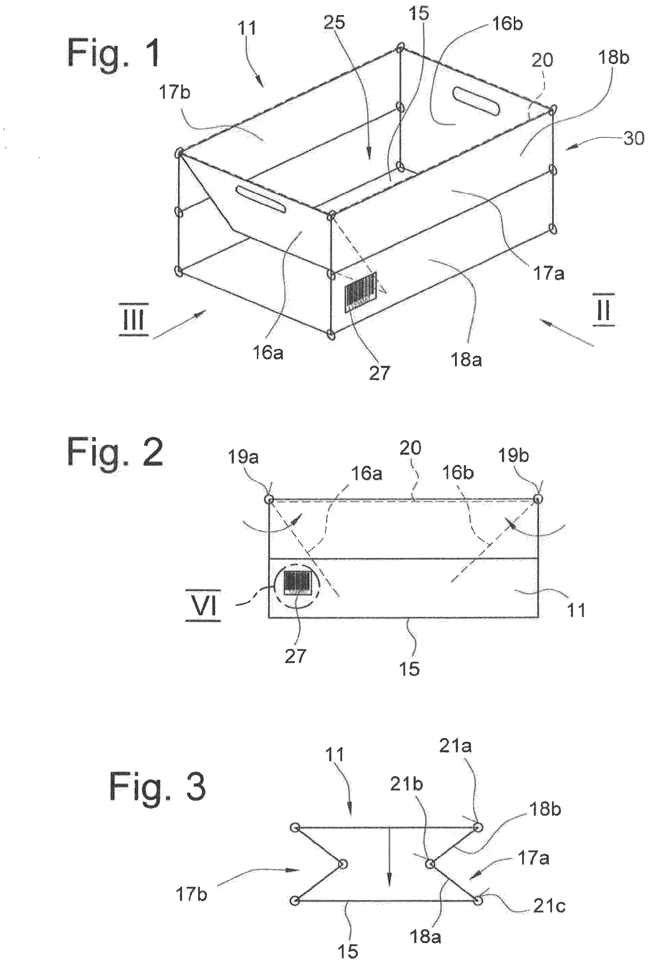

Wesentlicher Bestandteil eines erfindungsgemäßen Transportsystems ist eine Vielzahl von Kisten 11 unterschiedlicher Art. Eine Kiste 11 ist in den Figuren 1 bis 3 dargestellt und wird nachfolgend erläutert.

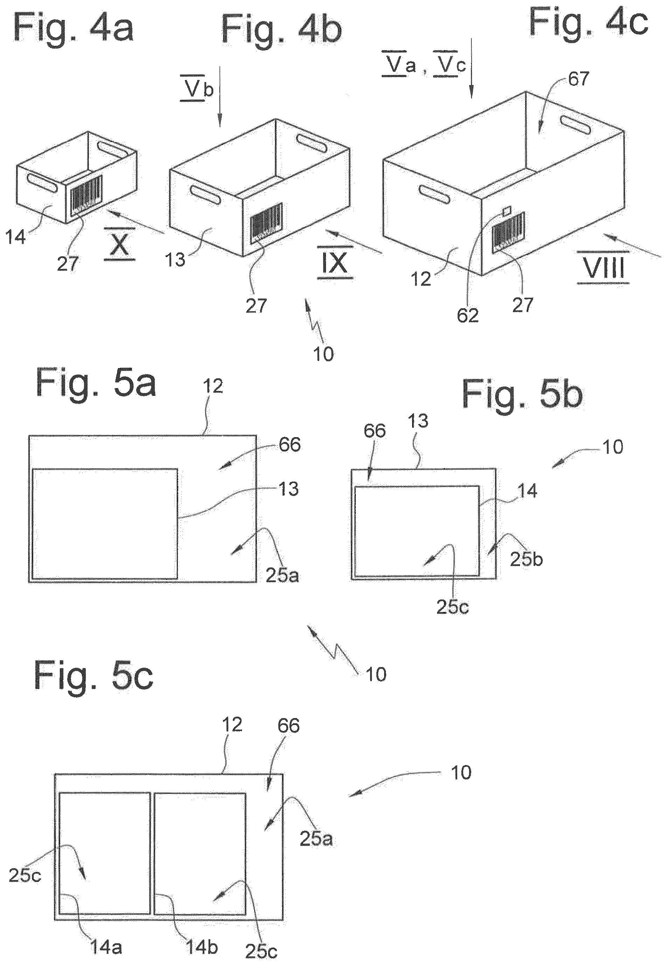

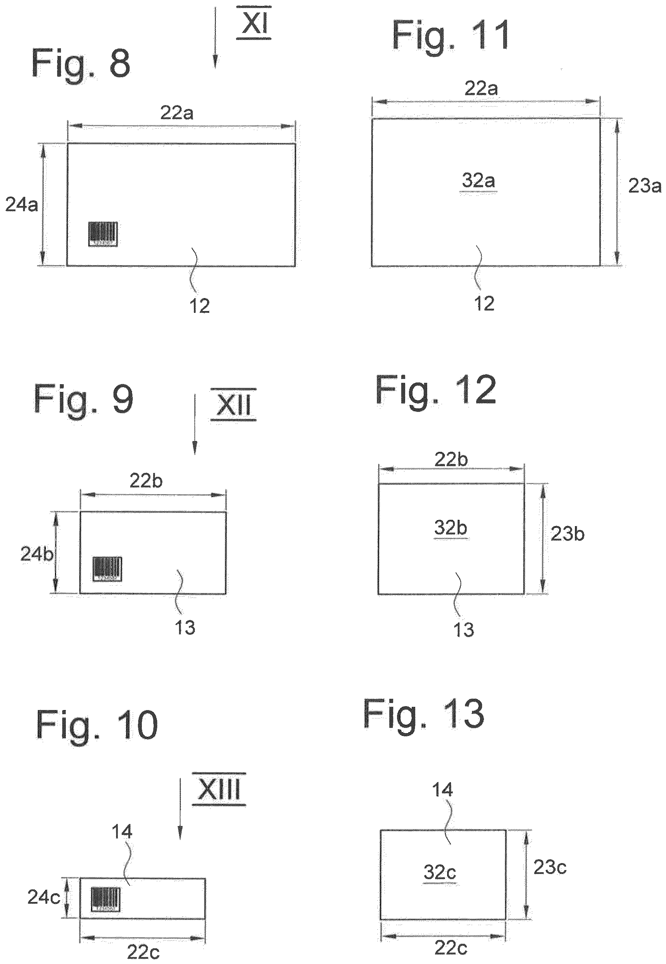

Das erfindungsgemäße Transportsystem 10 umfasst Kisten unterschiedlicher Art. Beim Ausführungsbeispiel der Fig. 14 weist das erfindungsgemäße Transportsystem Kisten 12 erster Art, Kisten 13 zweiter Art und Kisten 14 dritter Art auf. Die Kisten 12, 13, 14 unterscheiden sind, wie beispielsweise ein Vergleich der Fig. 4a, 4b, 4c und ein Vergleich der Figuren 8 bis 13 deutlich wird, durch ihre Größe.

Das Ausführungsbeispiel der Fig. 1 zeigt beispielhaft eine solche Kiste 11. Es kann sich dabei beispielsweise um eine Kiste 12 erster Art handeln.

Kisten einer Art sind identisch zueinander ausgebildet. Kisten unterschiedlicher Art sind zueinander ähnlich ausgebildet. Sämtliche Kisten sind im Gebrauchszustand quaderförmig ausgebildet. Insbesondere können die Kisten unterschiedlicher Art zueinander auch maßstäblich sein.

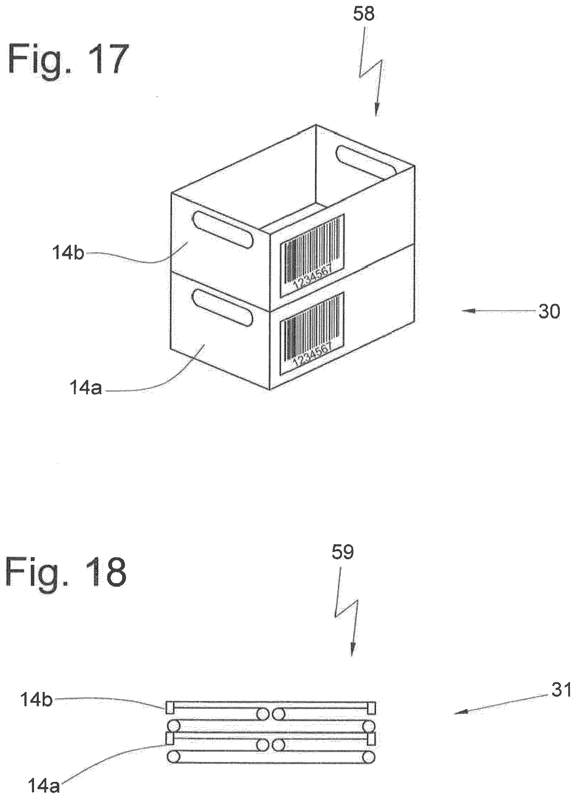

Die Kisten 11 sind als Faltkisten ausgebildet und zwischen einem Gebrauchszustand 30, der z. B. in Fig. 1 dargestellt ist, und einem zusammengelegten oder komprimierten Nichtgebrauchszustand 31, der z. B in Fig. 18 angedeutet ist, faltbar. Eine Kiste 11 umfasst jeweils eine Bodenwand 15, die eine rechteckförmige Grundfläche 32 bereitstellt. Von der Bodenwand 32 erstrecken sich vier Wände 16a, 16b, 17a, 17b nach oben. Die Schmalseitenwände 16a, 16b sind entlang von angedeuteten geometrischen Schwenkachsen 19a, 19b schwenkbar. Fig. 1 deutet an, dass die vordere Schmalseitenwand 16a teilweise nach innen verschwenkt ist, während die hintere Schmalseitenwand 16b noch ihre aufrechte Arbeitsposition einnimmt.

In dem Zustand gemäß Fig. 2 sind beide Schmalseitenwände 16a, 16b schon teilweise nach innen verschwenkt. Nach fortwährender Verschwenkung erreichen die Schmalseitenwände 16a, 16b - was in Fig. 2 nicht dargestellt ist - eine Position, derart, dass sie parallel zur Bodenwand 15 ausgerichtet sind.

Die Längsseitenwände 17a, 17b umfassen jeweils faltbare Wandabschnitte 18a, 18b. Wie sich anhand der Fig. 3 dem Betrachter erschließt, ist beispielsweise der faltbare Wandabschnitt 18a über Schwenkachsen 21c und 21b gelenkig angebunden und der Wandabschnitt 18b ist über die Schwenkachsen 21a und 21b gelenkig angebunden.

Anders ausgedrückt, sind jeweils zwei faltbare Wandabschnitte 18a, 18b über eine geometrische Schwenkachse 21b miteinander verbunden. Jeweils ein der Schwenkachse 21b fern angeordneten Bereichs der Wandabschnitte 18a, 18b ist an einer oberen Rahmenstruktur 20 angelenkt. Es handelt sich damit um übliche, von ihrem Funktionsprinzip her an sich bekannte Faltkisten oder Klappkisten.

Die Figuren 8 bis 13 verdeutlichen die unterschiedlichen Abmessungen der Kisten 12 erster Art, der Kisten 13 zweiter Art und der Kisten 14 dritter Art. Die Kiste 12 erster Art weist eine Höhe 24a, eine Länge 22a und eine Breite 23a auf. Die Kiste 13 zweiter Art weist eine Höhe 24b, eine Länge 22b und eine Breite 23b auf. Die Kiste 14 dritter Art weist eine Höhe 24c, eine Länge 22c und eine Breite 23c auf. Die Grundfläche der Kiste 12 erster Art ist mit 32a, die Grundfläche 13 zweiter Art ist mit 32b und die Grundfläche der Kiste 14 dritter Art ist mit 32c bezeichnet. Die Abmessungen sind vorteilhafterweise derart gewählt, wie sich z. B. aus Fig. 5a ergibt, dass sich eine Kiste 13 zweiter Art in eine Kiste 12 erster Art längs einsetzen lässt.

Fig. 5b zeigt, dass sich eine Kiste 14 dritter Art längs in eine Kiste 13 zweiter Art einsetzen lässt. Fig. 5c zeigt, dass sich zwei Kisten 14a, 14b dritter Art quer in eine Kiste 12 erster Art einsetzen lassen. Freilich lässt sich eine Kiste 14a, 14b dritter Art auch längs in eine Kiste 12 erster Art einsetzen.

Wie sich aus den Figuren 5a, 5b und 5c ergibt, verbleibt in der jeweils größeren Kiste bei eingesetzter kleinerer Kiste ein Restraum 66. Nicht dargestellt ist ein großer Restraum 66, der sich ergibt, wenn analog zur Darstellung gemäß Fig. 5c nur eine Kiste 14 dritter Art in eine Kiste 12 erster Art eingesetzt wird. Der jeweilige Restraum 66 dient zur Aufnahme weiterer Waren.

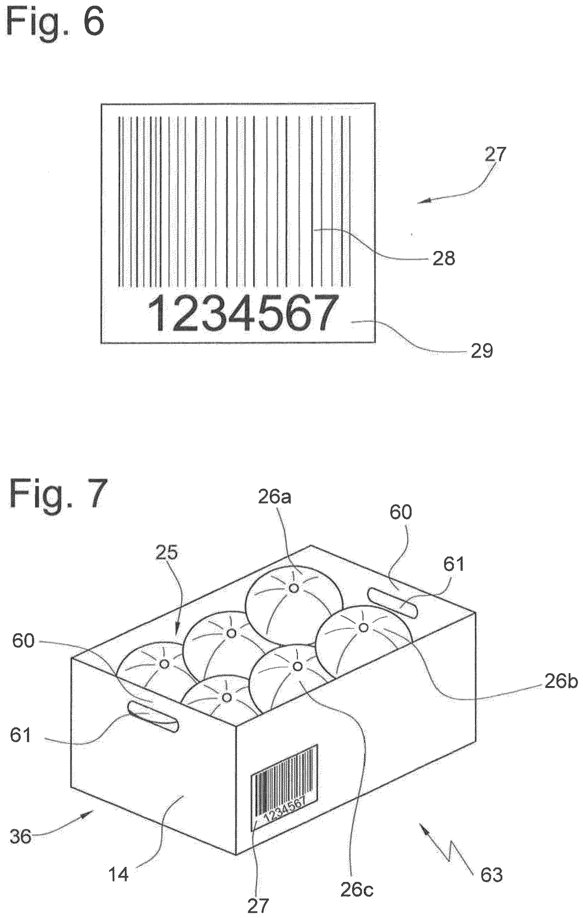

Fig. 7 zeigt eine Kiste 14 dritter Art, die mit Handelswaren 26a, 26b, 26c befüllt ist. Der jeweilige Innenraum 25 einer solchen Kiste 14 kann dabei vollständig mit Handelswaren 26a, 26b, 26c befüllt sein oder es können Freiräume verbleiben. Das Ausführungsbeispiel der Fig. 7 zeigt eine befüllte Kiste 36, im Unterschied zu einer leeren Kiste 67 gemäß Fig. 4c.

Fig. 7 zeigt darüber hinaus eine Primärverpackung 63 für Handelswaren, wie sie beispielsweise infolge einer Befüllung mit Waren an einem später noch zu erläuternden Befüllort bereitgestellt wird. Die Kisten 12 erster Art, Kisten 13 zweiter Art und Kisten 14 dritter Art können bei einer nicht dargestellten Ausführungsform der Erfindung jeweils im Bereich ihrer Bodenwand 15 z.B. so gestaltet sein, dass eine Art flüssigkeitsdichte Wanne ausgebildet ist. Hierdurch kann vorteilhaft ein Auslaufen von Flüssigkeiten verhindert werden. Jede der Kisten 11, 12, 13, 14 weist eine Kennung 27 auf. Dies ist beispielhaft in Fig. 6 dargestellt.

Das Ausführungsbeispiel der Fig. 6 zeigt eine Kennung 27, die einen Barcode 28 und einen alphanumerischen Code 29 umfasst. Bei weiteren, in den Figuren nicht dargestellten Ausführungsbeispielen weist die Kiste 11, 12, 13, 14 jeweils nur einen Barcode 28 oder nur einen alphanumerischen Code 29 oder nur eine andere Art oder mehrere Arten von Kennungen auf. Die Kennung 27 umfasst eine Information über die Art der Kiste. Die Information kann in dem Barcode versteckt untergebracht sein, aber durch manuelles oder automatisches Auslesen erkannt werden. Dies bietet die Möglichkeit, Kisten 12, 13, 14 unterschiedlicher Arten sicher zu erkennen. Auf diese Weise kann beispielsweise eine Kiste von einem Kistensortiersystem automatisch einsortiert werden, so dass eine Sortierung nach Größen erfolgen kann.

Auch können Kisten unterschiedlicher Art unterschiedliche Vermerke, z.B. unterschiedliche Pfandbeträge zugeordnet werden oder es können unterschiedliche, gegebenenfalls auch automatisierte Bearbeitungsprozesse, wie Reinigungs-, Desinfektions- oder Waschprozesse mit Kisten unterschiedlicher Art, durchgeführt werden.

Von der Erfindung ist auch umfasst, wenn die Kennung 27 eine Information über eine einzelne, individuelle Kiste 11, 12, 13, 14 umfasst. Die Kennung 27 kann also z.B. eine Art Seriennummer umfassen. Damit können die einzelnen Kisten individualisiert werden. So kann beispielsweise einer bestimmten Kiste eine Information zugeschrieben werden, wann mit der Kiste eine Bearbeitung erfolgt ist, z. B. wann eine Kiste 11, 12, 13, 14 mit bestimmten Handelswaren 26a, 26b, 26c befüllt wurde, oder noch befüllt sein müsste. Es kann also eine Information über die Kiste 11, 12, 13, 14 oder eine Information über die Handelswaren 26a, 26b, 26c oder eine Information über eine erfolgte Bearbeitung der Kisten, z. 8. eine Desinfektion einer bestimmten Kiste 11, 12, 13, 14, dieser bestimmten Kiste 11, 12, 13, 14, zugeordnet werden. Die Zuordnung der Information zu der Kiste kann z.B. elektronisch erfolgen, z.B. unter Zuhilfenahme eines externen Rechners und eines Netzwerks, das später beschrieben wird.

Von der Erfindung ist auch umfasst, wenn der Kennung 27 ein Speicher 62 zugeordnet ist. Der Speicher ist lediglich beispielhaft bei dem Ausführungsbeispiel der Kiste 12 erster Art in Fig.4c angedeutet. Ein solcher Speicher 62 kann mit der Kennung 27 verbunden sein. Er kann aber auch mit einem Computer 50 des Netzwerkes 49 verbunden sein. Der Speicher kann bei beiden Varianten beispielsweise drahtlos, elektronisch, beschreibbar und auslesbar sein und z.B. unter Verwendung von Funktechnologien, wie Bluetooth, WLAN, NFC oder anderen Funkprotokollen im Rahmen eines Datenaustausches beschrieben werden und/oder nur ausgelesen werden.

Fig. 14 beschreibt ein Ausführungsbeispiel eines erfindungsgemäßen Transportsystems 10, das auf die zuvor beschriebenen Kisten 12 erster Art, 13 zweiter Art, 14 dritter Art zurückgreift.

Die nachfolgende Beschreibung erfolgt konkret anhand des Ausführungsbeispiels der Fig. 14. Dem Fachmann ist aber deutlich, dass ein solches Transportsystem 10 auch nur Kisten 12 erster Art und Kisten 14 dritter Art aufweisen kann. Zugleich ist von der Erfindung umfasst, wenn noch andere unterschiedliche Arten von Kisten Bestandteil des Transportsystems 10 sind.

Ausweislich Fig. 14 ist im oberen linken Bildrand eine Befüllstation 34a angedeutet. Es handelt sich mithin um eine Station innerhalb des Transportsystems 10, in dem eine Befüllung der Kisten 10 mit Handelswaren 26 durchgeführt mit. Bei dem Ausführungsbeispiel der Fig. 14 ist die Befüllstation 34a als eine Fabrik angedeutet. Hier können z. B. Handelswaren 26a, 26b, 26c (vgl. Fig. 7) hergestellt werden, z. B. in Form von Brötchen. Gleichermaßen kommen auch andere Lebensmittel in Betracht, oder Life-Science-Produkte oder andere Handelswaren.

Im Folgenden sei angenommen, die Befüllstation 34a seit entlang eines Abschnittes 37a eines Bewegungspfades 33 mit leeren Kisten 67a, 67b, 67c beliefert worden. In der Fabrik 35 werden Brötchen gebacken, und die gebackenen Brötchen werden als Handelswaren 26a, 26b, 26c in die Kisten 67a, 67b, 67c gefüllt, so dass gefüllte Kisten 36a, 36b, 36c bestehen, die gemäß Fig. 14 innerhalb der Fabrik 35 angedeutet sind. Weiter sei angenommen, dass es sich bei den gefüllten Kisten 36a, 36b, 36c um Kisten 14a, 14b, 14c dritter Art handelt.

Eine Kiste 14d wird - lediglich beispielhaft dargestellt - entlang des Abschnittes 37b des Bewegungspfades 33 zu einem Handelsgeschäft 38 transportiert. Ein solches Handelsgeschäft 38 soll lediglich ein allgemeines Beispiel für eine Bereitstellungsstation 38 eines Transportsystems 10 darstellen. Das Handelsgeschäft 38 kann beispielsweise, wie in Fig. 14 angedeutet, ein Supermarkt sein. Der Supermarkt umfasst einen Eingang 68 für Kunden und einen Ausgang 69 für Kunden. Darüber hinaus umfasst der Supermarkt 38 einen Wareneingang 70, durch den hindurch die Kiste 14d, das Handelsgeschäft 38 erreicht. Innerhalb des Innenraums des Handelsgeschäftes 38 wird in einer Bereitstellungsstation 39 eine Positionierung der mit Handelswaren befüllten Kisten dritter Art mit den Bezugszeichen 14e und 14f vorgenommen. Kunden, die das Handelsgeschäft 38 durch den Eingang 68 hindurch betreten, können eine mit Handelswaren befüllte Kiste 14e, 14f dritter Art von der Bereitstellungsstation 39 entnehmen und die Handelswaren in der Kiste 14a, 14f dritter Art, insbesondere unter Einbehalt eines Pfandes für die Kiste 14e, 14f, kaufen. Sie können sich dazu entlang des Abschnittes 37e des Bewegungspfades 33 zu einer Kasse 42 des Handelsgeschäftes 38 begeben, die Handelswaren in der Kiste 14e kaufen und diese mit der Kiste nach Hause, oder zu einem beliebigen Verbrauchsort für die Waren oder zu einem beliebigen Verbrauchsort 43 für die Waren bewegen. Die Kiste 14i, 14g, 14j wird also entlang des Abschnittes 37i des Bewegungspfades 33 transportiert.

Die Kisten 12, 13, 14 unterschiedlicher Art des erfindungsgemäßen Transportsystems 10 können unter Zuhilfenahme von nicht dargestellten Adapterelementen, z.B. klickbaren oder clip-baren Adapterelementen, auch an Fahrzeugen, z.B. einem Fahrrad oder auch an einem Rollator oder einem Trolley für behinderte Personen, lösbar befestigt werden. In dem Verbrauchsort 43 findet ein Verbrauch oder eine Verwendung der Handelswaren 26a, 26b, 26c statt. Beispielsweise werden die Waren aufgegessen, verwendet, verbraucht und/oder benutzt. Die Kiste 14h ist nach der Entnahme der Handelswaren 26a, 26b, 26c geleert. Eine geleerte Kiste 67a kann entlang des Abschnittes 37g des Bewegungspfades 33 nun rückgeführt werden. Diese Kiste 67a kann z.B. über eine Rücknahmestation 44, die z. 8. als Pfandautomat 45 ausgebildet ist, rückgeführt werden und nachfolgend entlang des Abschnittes 37h des Bewegungspfades 33 einer Reinigungsstation, einer Waschstation oder einer Desinfektionsstation 46 zugeführt werden.

Alternativ kann die Kiste 67a von dem Kunden, veranschaulicht durch den Abschnitt 37f des Bewegungspfades 33, nochmals für einen nachfolgenden Einkauf verwendet werden. Der Nutzer kann also die leere Kiste 67a bei seinem nächsten Einkauf mitnehmen, beim Betreten des Handelsgeschäftes 38 durch den Eingang 68 einführen und diese Kiste 14x sodann nochmals mit Handelswaren selbstständig befüllen. Fig. 14 zeigt im Handelsgeschäft 38 einen Bereitstellungsort 41 für nicht kistengebundene Handelswaren, also für z. B. lose angeordnete Handelswaren. Die Kiste 14x kann von dem Benutzer für die Waren nochmal als Transportverpackung verwendet werden.

Eine in einer Station 46 gewaschene, gereinigte oder desinfizierte Kiste kann nachfolgend einem Lager 47 zugeführt werden. Dort kann die Kiste bis zu einer weiteren Verwendung aufbewahrt werden. Sie kann sodann aus dem Lager 47, gegebenenfalls unter Verwendung nicht dargestellter Zwischenlager, entlang dem Abschnitt 37a des Bewegungspfade 33 wiederum der Befüllstation 34a zugeführt werden. Auf diese Weise ist der Bewegungspfad 33 entlang der Abschnitte 37a, 37b, 37e, 37i, 37g, 37h geschlossen.

Selbstverständlich besteht die Möglichkeit, die gewaschene, gereinigte oder desinfizierte Kiste entlang des Abschnittes 37c des Bewegungspfades 33 einer anderen Befüllstation 48, z.B. einer anderen Fabrik, zuzuführen.

Weiter besteht die Möglichkeit, eine gewaschene und gereinigte Kiste, z. 8. aus einem Lager 47, entlang des Abschnittes 37j des Bewegungspfades 33 unmittelbar dem Handelsgeschäft 38 zuzuführen. Insbesondere kann im Handelsgeschäft 38 auch eine Bereitstellungsstation 40 für leere Kisten bereitgestellt sein.

Die Fig. 14 deutet einen solchen Bereitstellungsbereich 40 für leere Kisten 14k, 13, 12b und 12a an.

Ein Besucher oder Kunde des Handelsgeschäftes 38 kann also, wenn er keinerlei Transportbehältnisse bei sich hat, derartige Transportbehältnisse von der Bereitstellungstation 40 entnehmen, mit Handelswaren, die im Handelsgeschäft 38 erwerbbar sind, befüllen, die Handelswaren zusammen mit der Kiste unter Entrichtung eines Pfandes zu einem Verbrauchsort 43 transportieren, und nachfolgend mehrfach verwenden oder zu einer Rücknahmestation 44 zurückführen. Unmittelbar vor den losen Handelswaren, welche in Fig. 14 mit 41 bezeichnet sind, befindet sich insoweit eine Befüllstation 34b, in der Kisten 12, 13, 14 unterschiedlicher Art mit losen Waren 41 befüllt werden können. Auch hier ist insoweit ein geschlossener Bewegungspfad 33b vorhanden, der die Abschnitte 37x, 37i, 37g, 37h und 37j umfasst. Das erfindungsgemäße Transportsystem 10 stellt also geschlossene Bewegungspfade 33, 33b bereit.

Dabei können die Kisten 11, 12, 13, 14 als Primärverpackung eingesetzt werden und entlang der unterschiedlichen Stationen, wie Befüllstation 34, Fabrik 45, Bereitstellungsstation im Handelsgeschäft 38 und Verbrauchsstation 43, insbesondere unter Verwendung eines Pfand- oder Kennzeichnungs- oder Nummerierungssystems, zurückgeführt werden.

Die Kisten 11, 12, 13 14 sind sämtlich faltbar und können in einem Nichtgebrauchszustand, zusammengefaltet, komprimiert und damit platzsparend untergebracht werden. Eine Unterbringung im komprimierten Zustand kann z.B. an einer Befüllstation 34a, im Bereich einer Fabrik 35 aber auch einer Befüllstation 34b oder in einem Bereitstellungsbereich 40 erfolgen. Selbstverständlich kann eine platzsparende Unterbringung der Kisten auch am Verbrauchsort 33 oder im Bereich des Lagers 47 erfolgen.

Fig. 14 zeigt darüber hinaus angedeutet ein Netzwerk 49. Dieses umfasst einen ersten Rechner 50 und einen damit verbundenen zweiten Rechner 51. Selbstverständlich kann das Netzwerk 49 noch weitere, nicht dargestellte Rechner oder Recheneinheiten umfassen. Die Intelligenz dieses Netzwerkes 49 kann zentral oder dezentral organisiert sein. Das Netzwerk 49 ist Bestandteil des Transportsystems 10. Bestandteil des Netzwerkes 49 sind eine Vielzahl von Lese- und/oder Schreibstationen 52a, 52b, 52c, 52d, 52e, 52f, 52g. Die einzelnen Lese- oder Schreibstationen 52a, 52b, 52c, 52d, 52e, 52f, 52g haben unterschiedliche Aufgaben und Funktionen.

Im Bereich der Befüllstation 34a kann, z.B. im Bereich eines Warenausganges 71, eine Lese- oder Schreibeinrichtung 52a angeordnet sein. Mit dieser können beispielsweise die mit Handelswaren befüllten Kisten 14d dritter Art gescannt werden. Im Zuge diese Scanvorgangs kann über eine geeignete Erfassung die Kennung 27 ausgelesen werden. Zugleich kann beispielsweise automatisiert, der ausgelesenen Kennung 27, insbesondere eine Art Seriennummer eine Information zugeordnet werden, dass eine Befüllung dieser Kisten mit einer bestimmten Art von Waren und/oder mit einer bestimmten Zahl von Waren und/oder mit einem bestimmten Gewicht von Waren vorgenommen wurde. Es kann auch eine andere Information über die Befüllung dieser Kiste 14d mit Waren der Kennung und damit der Kiste zugeordnet werden.

Die generierte Information kann entweder in einem Speicher 62 der Kiste 14d abgelegt werden, oder sie kann über einen Signalleitungsabschnitt 64a, über den die Lese-/Schreibeinrichtung 52a mit dem Rechner 50 verbunden ist, an den Rechner 50 übermittelt werden.

Das Netzwerk 49 weiß also, dass eine bestimmte Kiste 14d dritter Art mit bestimmten Handelswaren 26a, 26b, 26c befüllt ist oder kennt eine andere Information der Waren. Das Auslesen der Kennung oder das Einschreiben der Informationen in Bezug zu der Kennung 27 kann unter Zuhilfenahme einer lediglich angedeutet dargestellten Funkstrecke 72 erfolgen. Derartige Funkstrecken sind an vielerlei Stellen vorgesehen, teilweise in Fig. 14 dargestellt, aber nicht überall bezeichnet. Die Signalstrecke 72 oder Funkstrecke 72 kann elektromagnetische Wellen oder akustische Wellen oder andere Signalübertragungsarten umfassen. Die Funkstrecke 72 soll jedenfalls andeuten, dass eine Kennung 27 der entsprechenden Kiste 11, 12, 13, 14 von der Leseeinrichtung 52 ausgelesen werden kann oder eine Information in einen Speicher der Kiste eingeschrieben werden kann oder eine Information über die Waren in Bezug zu der Kiste gesetzt werden kann.

Jede Lese-/Schreibeinrichtung 52a, 52b, 52c, 52d ist über einen Signalleitungsabschnitt 64a 64b, 64c, 64d mit dem Netzwerk 49 unmittelbar oder mittelbar verbunden.

Die Kiste 14d kann über einen Wareneingang 70 einem Handelsgeschäft 38 zugeführt werden. In den Figuren ist nicht dargestellt, dass im Bereich des Wareneingangs 70 des Handelsgeschäfts 38 eine weitere Lese-/Schreibeinrichtung vorgesehen ist, aber dort kann selbstverständlich eine weitere Lese-/Schreibeinrichtung vorgesehen sein.

Wenn eine mit Handelswaren befüllte Kiste, beispielhaft angedeutet die Kiste 14e dritter Art in Fig. 14, das Handelsgeschäft 38 verlässt, wird sie im Bereich der Kasse 42 ebenfalls gescannt oder gelesen. Hierzu ist eine Leseeinrichtung 52b vorgesehen. Diese kann unmittelbar mit der Kasse 42 verbunden sein, gegebenenfalls auch mit der Kasse 42 datentechnisch kooperieren, oder gesondert von der Kasse 42 angeordnet sein.

Die Leseeinrichtung 52b kann die Kennung 27 der Kiste 14i auslesen und z. B. einen Pfandvermerk oder einen anderen Vermerk generieren und diesen z. B. der Kasse mitteilen. Damit kann im Zuge der Berechnung und des Abverkaufes von der in der Kiste 14i enthaltenen Waren zusätzlich eine Pfandberechnung erfolgen. Unabhängig davon kann an das Netzwerk 49 von der Leseeinrichtung 52b auch eine Information übermittelt werden, dass die Kiste 14i dritter Art das Handelsgeschäft 38 nach Abverkauf der Waren verlassen hat.

Im Bereich der Rücknahmestation 44, z.B. im Bereich eines Pfandautomaten 45, kann eine weitere Leseeinrichtung 52d vorgesehen sein. Diese kann eine in die Rücknahmestation 44 eingebrachte Kiste 67a ebenfalls prüfen oder scannen und deren Kennung einlesen. Dabei kann der Pfandautomat 45 z.B. wiederum einen insbesondere elektronischen Vermerk berücksichtigen, wobei in Folge des Lesens der Kennung z.B. eine Pfandgutschrift erfolgt oder eine Pfandauszahlung. Freilich kann eine solche Pfandgutschrift auch rein elektronisch erfolgen.

Auch kann die Leseeinrichtung 52d mit dem Netzwerk 49 über einen Signalleitungsabschnitt 64f verbunden sein und dem Netzwerk 49 mitteilen, dass eine bestimmte Kiste 14a in das System zurückgegeben worden ist und - gegebenenfalls nach einer Reinigung - zur weiteren Verwendung zur Verfügung steht.

Im Bereich der Waschstation 46 kann eine Leseeinrichtung 52c dokumentieren, dass eine bestimmte Kiste einem bestimmten Wasch- oder Reinigungsvorgang, oder einem bestimmten Desinfektionsvorgang, unterzogen worden ist. Infolge dieser Dokumentation kann z.B. sichergestellt sein, dass für bestimmte, in bestimmte Kisten aufzunehmende Handelswaren, bestimmte Reinigungs- oder Desinfektionsschritte durchgeführt sind. So kann beispielsweise sichergestellt sein, dass für bestimmte Waren eine Behandlung der Kisten mit speziellen Chemikalien erfolgte, oder es kann ausgeschlossen werden, dass für bestimmte, von den Kisten aufzunehmenden Handelswaren, bestimmte Chemikalien bei der Reinigung oder bei der Desinfektion verwendet wurden.

Auch im Bereich der Reinigungsstation 46 kann die Information zu einer individuellen Kiste in Folge des Einlesens der Kennung 27 der Kiste durch die Leseeinrichtung 52c an das Netzwerk 49 und z. B. an den Rechner 50 übermittelt werden.

Der Rechner 50 oder das Netzwerk 49 kann einen nicht dargestellten Speicher aufweisen, der die erwähnten Informationen oder Zuordnungen aufrufbar speichert.

Bei einem Ausführungsbeispiel der Erfindung kann eine Leseeinrichtung 52g z.B. feststellen, welche und wie viele Kisten sich zu einem bestimmten Zeitpunkt in dem Lager 47 aufhalten.

Der Rechner 50, oder mehrere nicht dargestellte weitere Rechner, können damit z. B. auch Lagerplätze verwalten, so dass sich der Umlauf der Kisten 11, 12, 13, 14 optimiert, insbesondere bedarfsangepasst, steuern lässt. In dem Rechner 50, oder in einem anderen, an das Netzwerk 49 angeschlossenen Rechner, der in Fig. 14 nicht dargestellt ist, kann in Bezug zu einer individuellen bestimmten Kiste 11, 12, 13, 14 festgehalten werden, welche Stationen oder welche Bearbeitungen diese Kiste im Laufe des Lebens dieser Kiste durchlaufen hat. So kann beispielsweise die Art, die Häufigkeit der Verwendung der Kiste, die Zahl von Wasch- oder Desinfektionsvorgängen festgehalten werden, auch Verweildauern außerhalb eines Handelsgeschäftes oder innerhalb einer Befüllstation 34 sowie eine Information über die aufgenommenen Waren. So kann beispielsweise automatisiert überprüft werden, ob eine einzelne Kiste bereits eine Vielzahl von Verwendungen, z.B. einen Schwellverwendungswert einer bestimmten Zahl von Verwendungen, von z.B. 30 Verwendungen, überschritten hat. Stellt man eine solche Schwellwertüberschreitung fest, kann bezüglich einer speziellen Kiste eine automatisierte oder visuelle oder manuelle Inspektion vorgenommen werden, um die Funktionstüchtigkeit der Kiste zu überprüfen. Auch der Umstand, dass eine entsprechende Inspektion in Bezug zu einer bestimmten Kiste durchgeführt worden ist, kann unter Zuhilfenahme einer Lese-/Schreibeinrichtung und unter Speicherung der entsprechenden Information festgehalten werden. Damit kann ein solches Transportsystem sicher betrieben werden.

Im Bereich des Verbrauchsorts 43 der Waren kann auch eine Leseeinrichtung 52c vorgesehen sein, die über einen Signalverbindungsabschnitt 64c mit dem Netzwerk 49 verbunden ist. Eine solche Leseeinrichtung 52 kann z.B. von einem Internet-Browser bereitgestellt werden. Ein Käufer der mit Handelswaren befüllten Kiste 14h kann z.B. durch Eingabe des alphanummerischen Codes einer bestimmten Kiste auf einer Website explizit eine bestimmte Information erhalten, wo sich diese Kiste bereits befunden hat, welche Waren mit dieser Kiste transportiert worden sind, wann die Kiste das Handelsgeschäft verlassen hat, etc., um einen Einblick in ein solches Transportsystem zu ermöglichen und um die Akzeptanz zu erhöhen.

Von der Erfindung ist auch umfasst, wenn im Bereich der Rücknahmestation 44 eine Prüfung der Verweildauer der Kiste außerhalb des Handelsgeschäfts 38 vorgenommen wird. So kann z. B. zur Ermunterung und zur Schaffung eines Anreizes, entsprechende Kisten wieder schnell einer erneuten Verwendung zuzuführen, bei Rückgabe nach kurzer Verweildauer ein höheres Pfand ausgezahlt werden als nach Rückgabe nach einer längeren Verweildauer außerhalb des Handelsgeschäftes 38. Dies ermöglicht einen Betrieb des Transportsystems mit einer nur geringeren erforderlichen Anzahl von Kisten 11, 12, 13, 14.

Das erfindungsgemäße Transportsystem 14 sieht vor, dass Kisten dritter Art quer in Kisten 12 erster Art passen. So zeigt beispielsweise Fig. 14 eine Kiste 14j dritter Art innerhalb einer Kiste 12c erster Art zwischen dem Handelsgeschäft 38 und Verbrauchsort 43.

Wenn ein Benutzer bei einem Einkauf in einem Supermarkt oder einem anderen Handelsgeschäft 38 eine Kiste 12 erster Art ausleiht, kann er in dieser Kiste 12 eine als Primärverpackung ausgebildete Kiste 14e dritter Art unterbringen und zusätzlich noch weitere, nicht kistengebundene Handelswaren 41 unterbringen, für die ausreichender Transportraum oder Restraum 66 innerhalb der Kiste 12 erster Art zur Verfügung gestellt wird, selbst wenn darin bereits eine Primärverpackung 14 angeordnet ist. Damit wird dem Einkaufenden ein großer Komfort bereitet und eine komfortable Transportmöglichkeit zur Verfügung gestellt. Ein Kunde kann also, ohne dass er eigene Transportbehältnisse mitbringt, in einem Handelsgeschäft 38 auch bei ungeplanten Einkäufen auf Transportbehältnisse 11, 12, 13, 14 zurückgreifen, die in einem Mehrwegsystem angeboten werden. Wenn ein Benutzer ein Handelsgeschäft 38 durch einen Eingangsbereich 68 betritt, kann er durch Scannen seiner leeren Kiste durch eine Schreib-/Leseeinrichtung 52f einem Rechnersystem des Handelsgeschäftes z.B. mitteilen, dass diese Kiste pfandbefreit ist oder ein entsprechender Pfand von einem Benutzer bereits gezahlt worden ist. Es kann auch eine, insbesondere temporäre, Pfandgutschrift erfolgen oder generiert werden. Dabei kann ein, in Fig. 14 nicht dargestelltes, intern des Handelsgeschäftes 38 angeordnetes kleineres Netzwerk vorgesehen sein, das die entsprechende Information übermittelt. Dabei ist die Kasse 42 vorzugsweise an dieses kleinere interne Netzwerk angebunden.

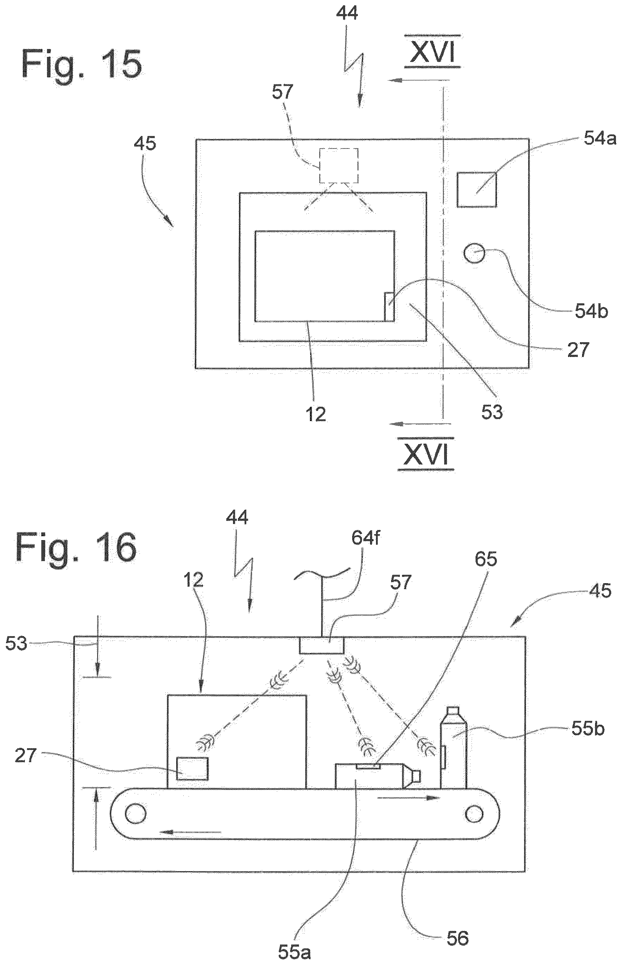

Eine Rücknahmestation 44 eines erfindungsgemäßen Transportsystems wird anhand eines Beispiels eines Pfandautomaten 45 anhand der Figuren 15 und 16 schematisch erläutert. Fig. 15 zeigt einen Pfandautomaten 45 in einer Vorderansicht, mit einer Aufnahmeöffnung 53, die so dimensioniert ist, dass auch die größten Kisten 12 des erfindungsgemäßen Transportsystems 10, vorliegend Kisten 12 erster Art, hineinpassen. Fig. 16 macht deutlich, dass die Kiste 12a erster Art auf ein Förderband 56 gestellt werden kann. Der Pfandautomat 45 weist eine Erfassungseinrichtung 57 auf, die z.B. der Schreib-/Leseeinrichtung 52d des Ausführungsbeispiels der Fig. 14 entsprechen kann.

Die Detektionseinrichtung 57 ist in der Lage, die Kennung 27 auszulesen und die Kiste 12 hinsichtlich ihrer Art zu erkennen sowie gegebenenfalls zusätzlich auch noch dazu ausgebildet, eine Seriennummer der Kiste 12 zu erkennen. Vorteilhaft ist die Detektionseinrichtung 57 auch dazu ausgebildet, Kennungen 65 an anderen Mehrwegbehältnissen, z.B. an Flaschen 55a, 55b auszulesen. Auf diese Weise kann ein Pfandautomat 45 sowohl zur Rücknahme von Mehrwegbehältnissen herkömmlicher Art als auch zur Rücknahme von Kisten 11, 12, 13, 14 eines erfindungsgemäßen Transportsystems 10 eingesetzt werden.

Fig. 17 zeigt schematisch einen Stapel 58 von im Gebrauchszustand befindlichen Kisten 14a dritter Art und Fig. 18 zeigt eine Stapel 58 von in Nichtgebrauchsposition befindlichen Kisten 14a dritter Art. Die Kisten weisen vorteilhafterweise einen nicht dargestellten Stapelrand auf um eine definierte und rutschfeste Positionierung gestapelter Kisten 14a, 14d zu erreichen.

Von der Erfindung ist auch umfasst, wenn eine erste Kiste 14a gemäß Fig. 17 von einer zweiten, darauf aufgesetzten Kiste 14b, verschlossen wird. Dabei kann sich die obere, auf der unteren Kiste 14a aufliegende Kiste 14b, - anders als in Fig. 17 dargestellt - in einem Nichtgebrauchszustand befinden und einen Deckel für die untere Kiste 14a ausbilden.

Von der Erfindung sind auch Handhabungseinheiten umfasst, die eine erste Kiste 14a erster Art, zweiter Art oder dritter Art und wenigstens eine darauf angeordnete zweite Kiste 14b derselben Art umfassen, wobei die zweite Kiste 14b in Nichtgebrauchszustand befindlich einen Deckel zum Verschluss der ersten Kiste 14a ausbildet.

Die so gebildete Handhabungseinheit kann auch für einen Transport oder eine Aufbewahrung höherwertiger oder hochwertiger Produkte dienen. Deckel 14b und durch diesen Deckel 14b verschlossene Kiste 14a können z. B. durch eine Art Plombe oder Sicherung miteinander verknüpft und verschlossen sein, so dass während des Versands oder der Aufbewahrung unbefugter Zugang zu den Waren in der Kiste 14a verhindert ist. Derartige Handhabungseinheiten sind z.B. auch über Transportunternehmen versandfähig.

Eine Nutzung der Kisten 11, 12 erster Art, der Kisten 13 zweiter Art, und der Kisten 14 dritter Art kann im Rahmen eines erfindungsgemäßen Transportsystems 10 z. B. unter Nutzung von Paketdiensten, Online-Bestellsystemen, Click- & Collect-Systemen, in Handelsgeschäften im Rahmen einer Vorortmiete und im Rahmen einer Primärverpackung erfolgen. Jede Kiste 11, 12, 13, 14 weist vorzugsweise an jeder der Schmalseitenwände 16a, 16b einen Griff 60 bzw. eine Grifföffnung 61 auf.

## Patentansprüche

1. Transportsystem (10) für Handelswaren und Liefergüter, umfassend
faltbare, aus Kunststoff bestehende, biegesteife Wände (16a, 16b) aufweisende und umlauffähig ausgebildete Kisten (11, 12, 13, 14), die ausgebildet sind, um aus einem Gebrauchszustand (30), in dem sie eine Quaderform aufweisen, in einen komprimierten Nichtgebrauchszustand (31) überführt werden zu können,
wobei die Kisten Kisten (12) erster Art und Kisten (14) dritter Art umfassen,
wobei eine Kiste (12) erster Art eine rechteckige Grundfläche (32a) mit ersten Abmessungen aufweist, die die Abmessungen einer Grundfläche einer Viertelpalette unterschreiten,
wobei eine Kiste (14) dritter Art eine rechteckige Grundfläche (32c) mit dritten Abmessungen aufweist, die die ersten Abmessungen unterschreiten,
wobei die Abmessungen der Kisten (12) erster Art und Kisten (14) dritter Art derart gewählt sind, dass zwei Kisten (14a, 14b) dritter Art quer in eine Kiste (12) erster Art einsetzbar sind.

2. Transportsystem nach Anspruch 1, ferner umfassend
Kisten (13) zweiter Art,
wobei eine Kiste (13) zweiter Art eine rechteckige Grundfläche (32b) mit zweiten Abmessungen aufweist, die die ersten Abmessungen unterschreiten,
wobei die dritten Abmessungen der rechteckigen Grundfläche (32c) der Kisten (14) dritter Art die zweiten Abmessungen unterschreiten,
wobei die Abmessungen der Kisten (12) erster Art, der Kisten (13) zweiter Art, und der Kisten (14) dritter Art derart gewählt sind, dass eine Kiste (14) dritter Art längs in eine Kiste (13) zweiter Art einsetzbar ist, und dass eine Kiste (13) zweiter Art längs in eine Kiste (12) erster Art einsetzbar ist.

3. Transportsystem nach einem der vorangegangenen Ansprüche, **dadurch gekennzeichnet, dass** die Kisten (11, 12, 13, 14) eine Kennung (27) aufweisen, wobei vorzugsweise die Kennung (27) die Art der Kisten bezeichnet, wobei Kisten (12, 13, 14) unterschiedlicher Art unterschiedliche Kennungen zugeordnet sind, wobei weiter vorzugsweise die Kennung (27) eine individuelle Kiste bezeichnet und die Kennung (27) als eine Seriennummer ausgebildet ist, die die einzelnen Kisten (14, 14b, 14c) voneinander unterscheidbar macht.

4. Transportsystem nach Anspruch 3, ferner umfassend einen Rechner (50, 51), der ausgebildet ist, die Kennungen (27) der Kisten zu verwalten und/oder der die Kennungen für eine Zuordnung von Informationen bereitzuhalten.

5. Transportsystem nach Anspruch 4, **dadurch gekennzeichnet, dass** der Rechner (50, 51) ausgebildet ist, einer als Seriennummer ausgebildeten Kennung (27) einer Kiste (11, 12, 13, 14) eine Information über eine Handelsware (26a, 26b, 26c) oder ein Liefergut und/oder eine Information über einen Zeitpunkt und/oder über eine Zeitdauer und/oder eine Information über einen Reinigungsvorgang und/oder eine Informationen über eine Zahl an Verwendungen der Kiste zuzuordnen.

6. Transportsystem nach einem der vorangegangenen Ansprüche **dadurch gekennzeichnet, dass** eine Kiste an ihren Schmalseiten (16a, 16b) jeweils Griffe (60) und/oder Grifföffnungen (61) aufweist.

7. Transportsystem nach einem der vorangegangenen Ansprüche **dadurch gekennzeichnet, dass** Kisten (12, 13, 14) unterschiedlicher Art maßstäblich zueinander ausgebildet sind.

8. Transportsystem nach nach einem der Ansprüche 4 bis 7, **dadurch gekennzeichnet, dass** der Kennung (27) ein beschreibbarer Speicher (62) zugeordnet ist, wobei die Kennung insbesondere an der Kiste angeordnet ist, wobei vorzugsweise vorgesehen ist, dass das Transportsystem ferner eine Schreibeinrichtung umfasst, die ausgebildet ist, eine Information in den Speicher einschreiben zu können.

9. Transportsystem nach einem der vorangegangenen Ansprüche **dadurch gekennzeichnet, dass** eine Kiste dritter Art eine Primärverpackung (63) für Handelswaren (26a, 26b, 26c) oder Liefergüter bereitstellt.

10. Transportsystem nach einem der vorangegangenen Ansprüche, ferner umfassend eine Waschstation (46) und/oder eine Reinigungsstation (46) und/oder eine Desinfektionsstation (46) für die Kisten.

11. Transportsystem nach einem der vorangegangenen Ansprüche, ferner umfassend einen Pfandautomaten (45), umfassend eine Aufnahmeöffnung (53) für die faltbaren Kisten und umfassend eine Detektionseinrichtung (57) zur Erkennung einer in die Aufnahmeöffnung eingesetzten Kiste.

12. Transportsystem nach Anspruch 11, **dadurch gekennzeichnet, dass** er Pfandautomat (45) zur Aufnahme von Kisten (12, 13, 14) unterschiedlicher Art ausgebildet ist und eine Detektionseinrichtung (57) umfasst, die dazu ausgebildet ist, Kisten (12, 13, 14) unterschiedlicher Art zu erkennen und voneinander zu unterscheiden und/oder Kennungen von Kisten (12, 13, 14) unterschiedlicher Art zu lesen und/oder zu erkennen.

13. Transportsystem nach Anspruch 12, **dadurch gekennzeichnet, dass** die Detektionseinrichtung (57) dazu ausgebildet ist, Kennungen von Pfandflaschen oder Pfandgläsern oder von anderen herkömmlichen Mehrwegbehältnissen auszulesen.

14. Verfahren zum Betreiben eines Transportsystems (10) nach einem der vorhergehenden Ansprüche, umfassend die folgenden Schritte:
a) Bereitstellen einer aus Kunststoff bestehenden, faltbaren, biegesteife Wände (16a, 16b, 17a, 17b) aufweisenden, umlauffähig ausgebildeten Kiste (11, 12, 13, 14),
b) Befüllen der Kiste (11, 12, 13, 14) mit Handelswaren (26a, 26b, 26c) oder Liefergütern,
c) Transportieren der Kiste (11, 12, 13, 14) zu einem Verbrauchsort (43) für die Handelswaren oder Liefergüter,
d) Rücktransportieren einer geleerten Kiste (67a),
e) Reinigen und/oder Desinfizieren der Kiste in einer Reinigungsstation (46),
wobei vorzugsweise vorgesehen ist, dass nach Schritt e) die Schritte a) bis e) wiederholt werden.

15. Verfahren nach Anspruch 14, ferner umfassend das Bereitstellen wenigstens einer weiteren Kiste einer weiteren Art und das Durchführen der Schritte 1) bis e) in Bezug zu den Kisten der weiteren Art.
